# EUROPEAN PATENT SPECIFICATION

(11) **EP 0 381 201 B1**
(45) Date of publication and mention of the grant of the patent: **06.04.1994**
(21) Application number: 90101932.3
(22) Date of filing: 31.01.1990
(51) Int. Cl.: F01M 1/06

(54) **2-cycle engine with direct lubricating structure**
Zweitaktbrennkraftmaschine mit Einrichtung zur direkten Schmierung
Moteur à combustion interne à deux temps avec structure de graissage direct

(30) Priority: 01.02.1989 JP 20819/89
(43) Date of publication of application: 08.08.1990
(73) Proprietor: YAMAHA HATSUDOKI KABUSHIKI KAISHA, Iwata-shi Shizuoka-ken, 438 (JP)
(72) Inventor: Masuda, Tatsuyuki, Iwata-shi, Shizuoka-ken (JP)
(74) Representative: Grünecker, Kinkeldey, Stockmair & Schwanhäusser Anwaltssozietät

(56) References cited:
- DE-C- 875 888
- US-A- 2 669 980
- US-A- 3 096 850
- US-A- 4 320 724
- US-A- 4 343 377

## Description

The present invention relates to a 2-cycle engine with a lubricating structure of a crankshaft lubricating system wherein lubricating oil is supplied directly to the spots to be lubricated, specifically for lubricating the crankshaft journal and the big end of a connecting rod of a crankshaft assembly, comprising an annular oil receiver which extends in an axially overlapping condition between the crank web and a crankshaft journal bearing to guide lubricating oil by means of an oil through passage to the outer periphery of a crank pin rotatably supporting the big end of the connecting rod.

In the separate oiling system recently employed frequently for lubricating the 2-cycle gasoline engines in which fuel-air mixture produced by the carburetor is supplied to the crank chamber through the intake passage, the lubricating oil is supplied into the intake passage upstream of the reed valve and, as mixed with the fuel-air mixture, lubricates the big end of the connecting rod, crankshaft journal and other lubricating points, and is combusted in the combustion chamber with the fuel and is finally discharged into the atmosphere together with the exhaust gas.

Thus, it is well-known in a 2-stroke engine to supply engine oil to the necessary portions, for example connecting rod metal, crankshaft journal directly. However, in such a separate oiling system oil tends to leak from clearances of moving engine parts. If, for preventing oil from being leaked, the quantity of the oil being supplied is decreased, then the lubricating ability becomes insufficient especially under high load/high engine speed conditions. If, on the other hand, the quantity of oil being supplied is increased taking the loss of oil which is going to be leaked into consideration yet more oil is leaked and blue smoke increasingly develops.

Thus, the 2-cycle engine provided with the separate oiling system requires more oil which is undesirable for coping with the problems of white, blue or black smoke constituents in the exhaust gas.

Accordingly, it has been thought about a lubricating system in which a required minimum amount of oil is only directly supplied to the points to be lubricated (sliding portions) but such a system requires special means to successively supply each lubricating point with a small amount of lubricating oil reliably. That is the oil supply becomes insufficient if only a required minimum amount of oil is supplied because of the oil leakage phenomena which may occur midway to the lubricating points. On the other hand, increased lubricating oil supply taking the midway oil leak into consideration results in a higher oil content in the exhaust gas which causes white, blue or black smoke.

A 2-cycle engine comprising a direct lubricating system to lubricate the crankshaft journal and the big end of a connecting rod of a crankshaft assembly as indicated in the preamble of claim 1 is disclosed in US-PS-3,096,850. In that case lubricating oil is fed to the space in between the inner and outer races of a journal bearing of the crankshaft, the ball bearing is disposed aside the crank web with a sealing ring in between mounted on the crankshaft, said sealing ring defines an oil pocket between the outer race of the bearing and the crank web by means of an axially obliquely extending flange partially axially overlapping with the outer race of the bearing and extending to sealingly contact a radially expanding sealing ring disposed in an annular groove of the outer race of the bearing. Such an assembly is relatively complicated and cumbersome to be mounted. Thus, the present invention is directed to provide a 2-cycle engine with an improved and simplified but reliable direct lubricating system, specifically for lubricating a crankshaft journal and the big end of a connecting rod of the crankshaft.

According to the present invention the afore-indicated objective is achieved by means of the characterizing features of claim 1.

By means of such a lubrication structure the small amount of lubricating oil supplied by the oil pump to the bearing for holding the crankshaft journal, leaks out of the bearing after lubricating it but since this leak oil is sufficiently received by the oil receiver or oil receiving projection arising from a side wall of the crank web and axially lapping with a portion of the bearing, the amount of oil leaking from the oil passage is reduced making it possible to securely supply every point to be lubricated with a required minimum amount of oil and consequently enabling to reduce white, blue or black smoke in the exhaust gas. Specifically, the oil which is leaked from the bearing is caught by the oil receiving projection so that the quantity of oil which is leaked out into the crank case is reduced and blue smoke is also reduced. This received oil is sent by the centrifugal force toward the crank pin through the oil passage, and then supplied to the big end of the connecting rod by the crank pin to lubricate it and is then scattered around in fine particles to lubricate the piston sliding surface of the cylinder etc. Thus, the oil which is caught by the projection flows in the oil passage towards the crank pin under the influence of centrifugal force.

Moreover, preferably the crank case is provided with oil supply passage-ways one end of which being connected to an oil pump whereas the other end forms an oil passageway portion which extends radially through the crankcase to open at the inner periphary of same.

Another advantageous embodiment of the present invention exists in that an oil hole facing the opening of the radial passageway portion to be connected therewith, is bored radially through the housing of the needle bearing.

The performance of the lubricating structure has proven to be highly satisfactory adopting an advantageous embodiment of the present invention wherein the needle bearing for the crankshaft journal is inserted into a bearing hole of the crankcase and one radial end face of the crankcase is provided with a counter bore formed around the bearing hole. Then, one end portion of the needle bearing housing is projected into said counter bore radially inwardly of the oil receiving projection engaging said counter-bore from the opposite side phase of the crank web with a radial clearance being left inbetween the projection of the crank web and the end portion of the needle bearing housing.

It is moreover preferred that an oil supply passage extends through the crankpin, inclined outwardly from an inlet just inside the oil receiving projection on the side surface of the crankweb, axially facing to the projecting end portion of the needle bearing housing and provided adjacent thereto, to a ball-plugged end portion of said passage distant from the needle bearing, with a radial oil passageway being provided to open at the one end into said inclined oil supply passage at an intermediate section thereof and opening at the other end on the outer periphery of the crankpin supporting the big end of the connecting rod through another needle bearing.

Further preferred embodiment of the present invention are laid down in the sub-claims.

In the following an embodiment of the present invention is explained in detail in conjunction with the drawings attached, wherein:
Figure 1 is a partial sectional view of the crank shaft of the 2-cycle diesel engine with a lubricating structure according to the present invention, and
Figure 2 is a vertical sectional view of the 2-cycle engine of Figure 1.

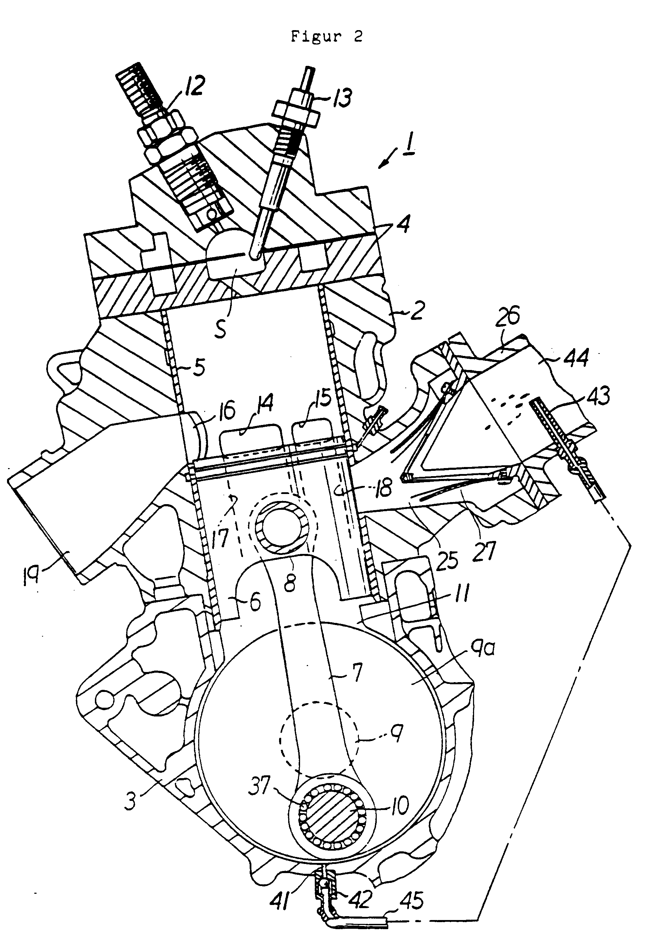

First is roughly described the structure of the 2-cycle Diesel engine shown in Fig. 2, wherein above the crankcase 3 is positioned a cylinder body 2 which is covered by a cylinder head 4. In the middle of the cylinder body 2 is formed a cylinder 5 in which is fitted a piston slidably vertically. To the piston 5 is connected the small end of the connecting rod 7 through a piston pin 8, and the big end of the connecting rod 7 is connected to the crank web 9a of the crankshaft 9 through the crank pin 10. The cylinder head 4 has a swirl chamber S formed therein into which is faced the tips of the fuel injection valve 12 and the glow plug 13 both screwed into the cylinder head 4. Further, the cylinder 5 has scavenging ports 14 and 15 and an exhaust port 16 opened therethrough. Although the fuel is injected into the swirl chamber S by the fuel injection valve 12 in this embodiment, the fuel may be injected directly into the cylinder 5 by the fuel injection valve 12 without furnishing this swirl chamber S.

On the other hand, the cylinder body 2 has scavenging passages 17 and 18 and an exhaust passage 19, one end of each of these scavenging passages 17 and 18 being opened into the cylinder 5 through their ports 14 and 15, respectively, and the other end of each of scavenging passages being opened into the crank chamber 11. One end of the exhaust passage 19 is opened into the cylinder 5 through the exhaust port 16 and to the other end of the exhaust passage 19 is connected an exhaust pipe (not shown).

Further, the cylinder body 2 has an intake passage 25 for each cylinder 3 formed at one side thereof, one end of which passage 25 is opened into the crank chamber 11, the other end of which passage 25 has an intake pipe 26 connected thereto and within which is provided a reed valve 27 for permitting the intake air to flow only toward the crank chamber 11.

Hereupon, the bottom portion of the crankcase 3 of this embodiment has an oil hole 41 bored therethrough to which hole 41 is connected a check valve 42.

On the other hand, the intake tube 26 has an oil spray nozzle 43 mounted through its wall and opened in the middle of the intake passage 44 within the tube 26 upstream of the reed valve 27, which nozzle 43 is connected with the check valve 42 through a tube 45, that is the crank chamber 11 and the intake passage 44 upstream of the reed valve 27 are communicated with each other through the check valve 42 and the tube 45. This check valve 42 prevents air from flowing into the crank chamber 11 from the intake passage 44, and also permits oil accumulated in the bottom of the crank chamber 11 to flow only toward the oil spray nozzle 43 as mentioned later.

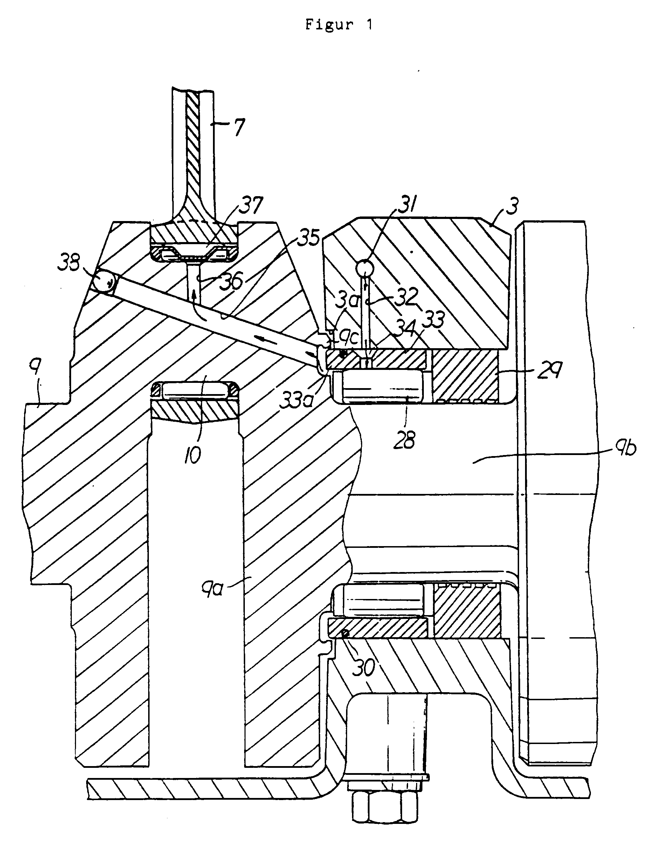

Now is described, referring to Fig. 1, the lubricating structure of this engine 1 which employs an oiling system in which a required minimum amount of oil is only directly supplied to the points to be lubricated (sliding portions).

The journal portion 9b of the crankshaft 9 is rotatably held by a needle bearing 28, and its portion outward (rightward in Fig. 1) of the needle bearing 28 is hermetically sealed by a labyrinth seal ring 29. The crankcase 3 holding the needle bearing 28 and the labyrinth seal ring 29 has a long oil passage 31 bored perpendicularly of the paper surface and communicated with an oil passage 32 radially bored through the crankcase 3. This oil passage 32 is opened at the inner periphery of the crankcase 3 where it is connected to the oil hole 34 bored through the housing 33 of the needle bearing 28. The oil passage 31 is connected to an oil pump (not shown) driven by the engine 1 for intermittently supplying a required minimum amount of oil.

One end face (left end face in fig.1) of the crankcase 3 has a counterbore 3a formed around the bearing hole into which is projected one end (left end in Fig. 1) 33a of the needle bearing housing 33. The reference number 30 denotes a spring for fastening the housing 33.

On the other hand, the side face of the crank web 9a opposite to the needle bearing 28 (right side face in Fig. 1) has an annular oil receiver 9c formed integrally and projected into the counterbore 3a. This oil receiving projection 9c covers from outside the end 33a of the housing 33 of the needle bearing 28 projected into the counterbore 3a, leaving a small radial clearance between the receiver 9c and the housing 33 and axially lapping with the projection 33a of the housing 33a by a definite length.

The crankshaft 9 has an oil passage 35 bored through the crankpin 10 slantly so that, the more axially distant the oil passage 35 extends from the needle bearing 28, the more radially distant it is positioned from the center line of the crankshaft 9. One end of this oil passage 35 distant from the needle bearing 28 (left end in Fig. 1) is plugged by a ball 38 press-fitted therein, and the other end of the passage 35 near to the bearing 28 (right end in Fig. 1) is opened just inside the oil receiver 9c on the end face of the crank web 9a. With this passage 35 is communicated an oil passage 36 bored through the crankpin 10 radially of the crankshaft 9 and opened on the outer periphery of the crankpin 10 on which periphery is held the big end of the connecting rod 7 through a needle bearing 37.

Next is described the action of this lubricating structure referring to Fig. 1.

While the engine 1 is running and the crankshaft 9 is rotating, a required minimum amount of oil is intermittently supplied to the needle bearing 28 by the oil pump (not shown) through oil passages 31 and 32 bored through the crankcase 3 and the oil passage 34 bored through the housing 33 of the needle bearing 28 to lubricate the journal 9b of the crank shaft 9. Thereafter, since the labyrinth seal ring 29 prevents the oil from leaking outward (rightward in Fig. 1), the oil leaks out of the needle bearing 28 only toward the crank. web 9a and is efficiently recovered by the oil receiver 9c and prevented from dropping down into the bottom of the crank chamber, because the oil receiver 9c projected from the crank web 9a laps with the projection 33a of the housing 33 of the needle bearing 28 to cover its outer periphery. The oil received by the oil receiver 9c flows, through the centrifugal force, through the passages 35 and 36 and reaches the outer periphery of the crankpin 10 to lubricate the big end of the connecting rod 7, and then is scattered around from the needle bearing 37 in fine particles to lubricate the piston sliding surface of the cylinder 5 shown in Fig. 2. Finally, part of the oil is introduced into the cylinder combustion chamber together with the intake air and is combusted together with the fuel, and the remainder is accumulated in the bottom of the crank chamber 11, sent to the oil spray nozzle 43 through the check valve 42 and the tube 45 and is sprayed by the nozzle 43 to lubricate the reed valve 27 to reduce its seating noises. Consequently, white, blue or black smoke in the exhaust gas can be reduced while a required minimum amount of oil can be securely supplied to every point to be lubricated.

As mentioned above, the lubricating structure according to this invention makes it possible securely to supply the crankshaft journal 9b and the big end of the connecting rod 7 successively with such a degree of small amount of oil that it will never interfere with the black smoke countermeasure for the exhaust gas.

Although the above description is specifically for the lubricating structure of the 2-cycle Diesel engine, this invention is of course applicable to the lubricating structure of the fuel injection type 2-cycle gasoline engine incorporated with the similar oiling system.

## Claims

1. A 2-cycle engine with a lubrication structure of a crankshaft system wherein lubricating oil is supplied only directly to the spots to be lubricated, specifically for lubricating the crankshaft journal and the big end of a connecting rod of the crankshaft assembly, comprising an annular oil receiver which extends in an axially overlapping condition between the crank web (9a) and a crankshaft journal bearing to guide lubrication oil by means of an oil through passage (35) one end of which opens just inside said projecting oil receiver (9c) whereas the other end opens on the outer periphery of the crankpin (10) rotatably supporting the big end of the connection rod, a side wall of the crank web (9a) comprising a projection (9c) defining the oil receiver, said projection (9c) protruding adjacent to an end portion (33a) of the housing (33) of the crank shaft journal bearing, said projection (9c) extending into and engaging a counter-bore (3a) formed in the crank case (3) around the bearing hole, the end portion (33a) of the bearing housing (33) projecting into said counter-bore (3a) radially inwardly of the oil receiving projection (9c), a clearance being left between the projecting oil receiver of the crank web and the end portion of the bearing housing, (33), said projection (9c) engaging said counter-bore (3a) from the opposite side wall of the crank web (9a), with a radial clearance being left between the projection (9c) and the end portion (33a) of the bearing housing (33)
**characterized in that**
the projection (9c) is formed integrally with said side wall of the crank web (9a).

2. A 2-cycle engine as claimed in claim 1**, characterised in that** the crankshaft journal bearing is a needle bearing (28) rotatably supporting a journal portion (96) of the crankshaft (9).

3. A 2-cycle engine according to claim 2, **characterised in that** a labyrinth seal ring (29) is provided at an axially outwards facing side of the needle bearing (28) in order to hermetically seal the space in between the crankcase (3) and the crankshaft journal (9b).

4. A 2-cycle engine as claimed in at least one of the preceding claims 1 to 3, **characterised in that** the crankcase (3) is provided with oil supplied passageways (31, 32) one end of which is connected to an oil pump whereas the other end forms a radial oil passageway portion (32) which extends radially through the crankcase (3) to open at the inner periphery of said crankcase (3).

5. A 2-cycle engine as claimed in at least one of the preceding claim 4, **characterised in that** an oil hole (34), facing the opening of the radial passageway portion (32) to be connected therewith, is bored radially through the housing (33) of the needle bearing (28).

6. A 2-cycle engine as claimed in at least one of the preceding claims 2 to 5, **characterised in that** said oil receiving projection (9c) from the side surface of the crank web (9a) opposite to the needle bearing (28) is adapted to axially lapping with the projecting end portion (33a) of the bearing housing (33) by a definite length leaving a small radial clearance in between.

7. A 2-cycle engine as claimed in claim 1, **characterized in that** the projecting end portion (33a) of the bearing housing (33) projects into a groove formed beneath the projection (9c), with a radial clearance being left between said groove and the inner surface of the projecting end portion (33a) of the bearing housing (33).

8. A 2-cycle engine as claimed in at least one of the preceding claims 1 to 7, **characterised in that** an oil supply passage (35) extends through the crank pin (10) inclined upwardly from an inlet just inside the oil receiving projection (9c) on the side surface of the crank web (9a), axially facing to the projecting end portion (33a) of the needle bearing housing (33) and disposed adjacent thereto, to a ball-plugged end portion of said passage (35) distant from the needle bearing (28), whereas a radial oil passageway (36) is provided opening at the one end into said inclined oil supply passage (35) at an intermediate section thereof and opening at the other end on the outer periphery of the crankpin (10) supporting the big end of the connecting rod (7) through another needle bearing (37).

## Patentansprüche

1. Zweitaktmotor mit einer Schmierungsanordnung eines Kurbelwellensystems, wobei Schmieröl nur direkt zu den Stellen zugeführt wird, die geschmiert werden sollen, insbesondere zur Schmierung der Kurbelwellenlager und des Kurbelzapfenendes einer Pleuelstange der Kurbelwellenanordnung, mit einem ringförmigen Ölaufnehmer, der sich in axial überlappendem Zustand zwischen der Kurbelscheibe (9a) und einem Kurbelwellenlager erstreckt, um Schmieröl durch einen Öldurchgangskanal (35), dessen eines Ende sich gerade innerhalb des vorspringenden Ölaufnehmers (9c) öffnet, während das andere Ende sich am Außenumfang des Kurbelzapfens (10) öffnet, zu fuhren, der drehbar das Kurbelzapfenende der Pleuelstange lagert, wobei eine Seitenwand der Kurbelscheibe (9a) einen Vorsprung (9c) aufweist, der den Ölaufnehmer bildet, wobei der Vorsprung (9c) benachbart zu einem Endabschnitt (33a) des Gehäuses (33) des Kurbelwellenlagers vorspringt, der Vorsprung (9c) sich hinein und in Eingriff mit einer Gegenbohrung (3a), ausgebildet in dem Kurbelgehäuse (3) rund um die Lagerbohrung erstreckt, der Endabschnitt (33a) des Lagergehäuses (33) radial innenliegend in bezug auf den Ölaufnehmervorsprung (9c) in die Gegenbohrung (3a) vorspringt, ein Spalt zwischen dem vorspringenden Ölaufnehmer der Kurbelscheibe und dem Endabschnitt des Lagergehäuses (33) belassen ist, der Vorsprung (9c) mit der Gegenbohrung (3a) von der gegenüberliegenden Seitenwand der Kurbelscheibe (9a) in Eingriff tritt, und wobei ein radialer Spalt zwischen dem Vorsprung (9c) und dem Endabschnitt (33a) des Lagergehäuses (33) belassen ist, **dadurch gekennzeichnet**, daß der Vorsprung (9c) integral einstückig mit der Seitenwand der Kurbelscheibe (9a) ausgebildet ist.

2. Zweitaktmotor nach Anspruch 1, **dadurch gekennzeichnet**, daß das Kurbelwellenlager ein Nadellager (28) ist, das drehbar einen Lagerzapfenabschnitt (96) der Kurbelwelle (9) lagert.

3. Zweitaktmotor nach Anspruch 2, **dadurch gekennzeichnet**, daß ein Labyrinthdichtungsring (29) an einer axial auswärtsweisenden Seite des Nadellagers (28) vorgesehen ist, um hermetisch den Raum zwischen dem Kurbelgehäuse (3) und dem Kurbelwellenlager (9b) abzudichten.

4. Zweitaktmotor nach zumindest einem der vorhergehenden Ansprüche 1 bis 3**, dadurch gekennzeichnet**, daß das Kurbelgehäuse (3) mit Ölzuführungskanälen (31, 32) versehen ist, von denen ein Ende mit einer Ölpumpe verbunden ist, während das andere Ende einen radialen Ölkanalabschnitt (32) bildet, der sich radial durch das Kurbelgehäuse (3) erstreckt, um sich am Innenumfang des Kurbelgehäuses (3) zu öffnen.

5. Zweitaktmotor nach Anspruch 4, **dadurch gekennzeichnet,** daß eine Ölbohrung (34), die der Öffnung des radialen Kanalabschnittes (32) zur Verbindung mit diesem gegenüberliegt, radial durch das Gehäuse (33) des Nadellagers (38) gebohrt ist.

6. Zweitaktmotor nach zumindest einem der vorhergehenden Ansprüche 2 bis 5, **dadurch gekennzeichnet**, daß der Ölaufnahmevorsprung (9c) von der Seitenfläche der Kurbelscheibe (9a) gegenüberliegend dem Nadellager (28) vorgesehen ist, um axial sich um eine bestimmte Länge mit dem vorspringenden Endabschnitt (33a) des Lagergehäuses (33) unter Belassung eines kleinen radialen Spaltes zu diesem zu überlappen.

7. Zweitaktmotor nach Anspruch 1, **dadurch gekennzeichnet**, daß der vorspringende Endabschnitt (33a) des Lagergehäuses (33) in eine Nut vorspringt, die unter dem Vorsprung (9c) ausgebildet ist, wobei ein radialer Spalt belassen ist zwischen der Nut und der Innenoberfläche des vorspringenden Endabschnittes (33a) des Lagergehäuses (33).

8. Zweitaktmotor nach zumindest einem der vorhergehenden Ansprüche 1 bis 7, **dadurch gekennzeichnet**, daß ein Ölzuführungskanal (35) sich durch den Kurbelzapfen (10) geneigt abwärts erstreckt, von einem Einlaß direkt innerhalb des ölaufnehmenden Vorsprunges (9c) der Seitenfläche der Kurbelscheibe (9a), axial dem vorspringenden Endabschnitt (33a) des Nadellagergehäuses (33) gegenüberliegend und benachbart zu diesem angeordnet, zu einem kugel-verschlossenen Endabschnitt des Kanales (35), beabstandet von dem Nadellager (28), während ein radialer Ölkanal (36) vorgesehen ist, der sich an dem einen Ende in den geneigten Ölzuführungskanal (35) an einem Zwischenabschnitt desselben öffnet und der sich an dem anderen Ende auf dem Außenumfang des Kurbelzapfens (10), der das Kurbelzapfenende der Pleuelstange durch ein weiteres Nadellager (37) lagert, öffnet.

## Revendications

1. Moteur à deux temps ayant une structure de graissage d'un dispositif formant vilebrequin dans lequel de l'huile de graissage est alimentée uniquement directement vers les points à graisser, de manière spécifique pour graisser le tourillon de vilebrequin et le pied de bielle d'une bielle de l'ensemble formant vilebrequin, comportant une structure de réception annulaire d'huile qui s'étend dans un état de recouvrement axial le flasque de manivelle (9a) et un palier pour tourillon de vilebrequin pour guider l'huile de graissage par l'intermédiaire d'un passage d'huile traversant (35) dont une extrémité s'ouvre juste à l'intérieur de ladite structure (9c) de réception de l'huile projetée alors que l'autre extrémité s'ouvre sur la périphérie extérieure du maneton (10) supportant de manière rotative le pied de bielle de la bielle, une paroi latérale du flasque de manivelle (9a) comportant une saillie (9c) délimitant la structure de réception d'huile, ladite saillie (9c) faisant saillie en étant adjacente à une partie d'extrémité (33a) du boîtier (33) du palier de tourillon de vilebrequin, ladite saillie (9c) s'étendant jusqu'à y pénétrer dans un contre-alésage (3a) formé dans le carter (3) de vilebrequin autour du trou pour palier, la partie d'extrémité (33a) du boîtier (33) pour palier faisant saillie dans ledit contre-alésage (3a) radialement vers l'intérieur de la saillie (9c) de réception de l'huile, un jeu étant maintenu entre la structure de réception de l'huile projetée du flasque de manivelle et la partie d'extrémité du boîtier (33) de palier, ladite saillie (9c) pénétrant dans ledit contre-alésage (3a) à partir de la paroi latérale opposée du flasque de manivelle (9a), un jeu radial étant maintenu entre la saillie (9c) et la partie d'extrémité (33a) du boîtier (33) de palier,
caractérisé en ce que
la saillie (9c) est formée d'une pièce avec ladite paroi latérale du flasque de manivelle (9a).

2. Moteur à deux temps selon la revendication 1, caractérisé en ce que le palier de tourillon de vilebrequin est un palier à aiguilles (28) supportant de manière rotative une partie (96) formant tourillon du vilebrequin (9).

3. Moteur à deux temps selon la revendication 2, caractérisé en ce qu'un anneau (29) formant joint à labyrinthe est agencé au niveau d'un côté du palier à aiguilles (28) dirigé axialement vers l'extérieur pour assurer l'étanchéité de manière hermétique de l'espace existant entre le carter (3) de vilebrequin et le tourillon (9b) de vilebrequin.

4. Moteur à deux temps selon l'une quelconque des revendications 1 à 3, caractérisé en ce que le vilebrequin (3) comporte des passages d'alimentation d'huile (31, 32) à une extrémité desquels est reliée une pompe à huile alors que l'autre extrémité forme un tronçon radial (32) de passage d'huile qui s'étend radialement à travers le carter (3) de vilebrequin pour s'ouvrir au niveau de la périphérie intérieure dudit vilebrequin (3).

5. Moteur à deux temps selon la revendication 4, caractérisé en ce qu'un trou (34) pour huile situé en vis à vis de l'ouverture du tronçon (32) de passage radial pour être relié à celle-ci, est percé radialement à travers le boîtier (33) du palier à aiguilles (28).

6. Moteur à deux temps selon l'une quelconque des revendications 2 à 5, caractérisé en ce que ladite saillie (9c) de réception d'huile à partir de la surface latérale du flasque de manivelle (9a) opposée au palier à aiguilles (28) est adaptée pour recouvrir axialement la partie (33a) d'extrémité en saillie du boîtier (33) de palier sur une longueur définie en laissant un petit jeu radial entre eux.

7. Moteur à deux temps selon la revendication 1, caractérisé en ce que la partie (33a) d'extrémité en saillie du boîtier (33) de palier fait saillie jusque dans une gorge formée en dessous de la saillie (9c), un jeu radial étant maintenu entre ladite gorge et la surface intérieure de la partie (33a) d'extrémité en saillie du boîtier (33) de palier.

8. Moteur à deux temps selon l'une quelconque des revendications 1 à 7, caractérisé en ce qu'un passage (35) d'alimentation d'huile s'étend à travers le maneton (10) en étant incliné vers le haut à partir d'une entrée située juste à l'intérieur de la saillie (9c) de réception d'huile située sur la surface latérale du flasque de manivelle (9a), en vis à vis axialement de la partie (33a) d'extrémité en saillie du boîtier (33) de palier à aiguilles et agencée adjacente à celui-ci, vers une partie formant extrémité fermée par une bille dudit passage (35) éloignée du palier à aiguilles (28), alors qu'un passage radial (36) d'huile est agencé s'ouvrant au niveau d'une première extrémité dans ledit passage (35) incliné d'alimentation d'huile au niveau d'un tronçon intermédiaire de ce dernier et ouvrant à l'autre extrémité à la périphérie extérieure du maneton (10) supportant le pied de bielle de la bielle (7) par l'intermédiaire d'un autre palier à aiguilles (37).
